# EUROPÄISCHE PATENTSCHRIFT

(11) **EP 1 542 612 B1**
(45) Veröffentlichungstag und Bekanntmachung des Hinweises auf die Patenterteilung: **03.01.2007**
(21) Anmeldenummer: 03775158.3
(22) Anmeldetag: 18.09.2003
(51) Int. Cl.: A61C 5/06, B65D 81/32

(54) **VERPACKUNG ZUM LAGERN VON SUBSTANZEN**
PACKAGING FOR STORING SUBSTANCES
EMBALLAGE SERVANT A STOCKER DES SUBSTANCES

(30) Priorität: 18.09.2002 DE 10243401
(43) Veröffentlichungstag der Anmeldung: 22.06.2005
(73) Patentinhaber: VOCO GmbH, 27472 Cuxhaven (DE)
(72) Erfinder: LEINER, Uwe, 27632 Midlum (DE); PLAUMANN, Manfred, Thomas, 27476 Cuxhaven (DE)
(74) Vertreter: Eisenführ, Speiser & Partner
(86) Internationale Anmeldenummer: PCT/EP2003/010368
(87) Internationale Veröffentlichungsnummer: WO 2004/028389

(56) Entgegenhaltungen:
- EP-A- 0 895 943
- EP-A- 1 153 579
- WO-A-00/09416

## Beschreibung

Die vorliegende Erfindung betrifft eine Verpackung zum Lagern zumindest zweier Substanzen in separaten Kammern. Die Verpackung ist dabei insbesondere zum Lagern und Applizieren mehrkomponentiger fließfähiger Dentalmaterialien geeignet, die aus zwei oder mehr Substanzen zusammengemischt werden können. Ein besonderes Einsatzgebiet der erfindungsgemäßen Verpackung ist die Lagerung und Applikation von Komponenten fließfähiger dentaler Adhäsiv- oder Befestigungssubstanzen, Fluoridlacke, Liner oder Desensitizer.

In vielen verschiedenen Anwendungsfällen, vor allem in der Medizin oder Zahnmedizin, ist es notwendig, eine geringe Menge einer fließfähigen, in manchen Fällen pastösen Substanz auf unterschiedliche Oberflächen wie menschliche Haut, Haare oder Zähne aufzutragen. Häufig muss die aufzutragende Substanz unmittelbar vor der Anwendung durch Vermischen zweier Substanzkomponenten hergestellt werden, die bis zur Vermischung aus Haltbarkeitsgründen getrennt voneinander aufbewahrt werden müssen.

Die zum Mischen der Substanzkomponenten und zum Applizieren der durch Vermischen gebildeten Substanz eingesetzten Misch- bzw. Applikationsvorrichtungen werden häufig aus Sterilitätsgründen als Einwegartikel konzipiert. Um eine Verunreinigung der zu vermischenden Substanzen auszuschließen, werden vorgefertigte, mit geringen Substanzmengen portionierte Verpackungen, Behältnisse und Blisterverpackungen angeboten. In jüngerer Zeit haben wir z.B. im Rahmen der EP 1 153 579 A2 Verpackungen offenbart, die bereits gut zum Lagern und Vermischen zweier Substanzen geeignet sind, wobei das Vermischungsprodukt auch leicht entnommen und appliziert werden kann. Blisterverpackungen und Applikationssysteme für medizinische und/oder zahnmedizinische Anwendungen sind aber z.B. auch aus der EP 770 021 und der EP 895 943 B1 bekannt.

Nachteilig bei den bekannten Systemen ist jedoch, dass sie in der Handhabung noch recht unkomfortabel sind und es beim Vermischen zweier zuvor getrennt gelagerter Substanzen bzw. dem Entnehmen des resultierenden Substanzgemisches leicht zu Fehlern kommen kann, die das Applikationsergebnis nachteilig beeinflussen können. Die Herstellung der bekannten Verpackungen ist zudem recht aufwendig und kostenintensiv.

Die bereits erwähnte EP 895 943 B1 beschreibt u.a. Vorrichtungen (Verpackungen), die zur getrennten Aufnahme unterschiedlicher Substanzen zwei Kammern umfassen, die über einen selektiv zu öffnenden Durchgangsbereich miteinander in Verbindung zu bringen sind. Der Durchgangsbereich kann dabei geöffnet werden, indem auf eine der beiden Kammern ein Druck ausgeübt wird. Neben einer der beiden Kammern befindet sich eine separate weitere Kammer, welche die Gestalt einer Tasche besitzt und ein Auftraginstrument einschließt. Diese weitere Kammer ist mit der angrenzenden, eine Substanz umfassenden Kammer über einen zweiten selektiv zu öffnenden Durchgangsbereich verbunden. Zum Vermischen der unterschiedlichen Substanzen in den zwei erstgenannten Kammern wird Druck auf eine dieser Kammern ausgeübt, so dass sich der erste selektiv zu öffnende Durchgangsbereich öffnet. Unter der Druckwirkung wird Substanz aus der druckbeaufschlagten Kammer in die angrenzende Kammer überführt und mit der dort bereits vorgelegten Substanz vermischt. Hierbei kommt es allerdings relativ leicht zu einer vorzeitigen Öffnung des zweiten Durchgangsbereiches zu der weiteren Kammer, in welcher sich das Auftraginstrument befindet. Dieses wird dann nachteiligerweise mit zwei noch nicht oder nur unzureichend vermischten separaten Substanzen in Kontakt gebracht. Kommt es aber nicht zu einem vorzeitigen Öffnen des Durchgangsbereiches zu der weiteren Kammer mit dem Auftraginstrument, kann die gewünschte Vermischung erfolgen. Nach dem Vermischen wird dann der zweite Durchgangsbereich zwischen der das Auftraginstrument enthaltenden Kammer und der angrenzenden (Vermischungs-)Kammer geöffnet und das Auftraginstrument in die Vermischungskammer eingeführt. Hierbei kann leicht der Fehler unterlaufen, dass das Substanzgemisch über den zuerst geöffneten Durchgangsbereich in die angrenzende Kammer zurückströmt. Die Entnahme des Substanzgemisches ist dann nachteilig erschwert, ein Anteil des Substanzgemisches geht für die Anwendung verloren und es kommt deshalb zu Ungenauigkeiten bei der Anwendung. Zusätzlich wird bei einem (zu) tiefen Eintauchen des Auftraginstrumentes bis in die Mischkammer oder sogar bis in die erste Kammer der Schaft des Applikationsinstrumentes mit Substanz beschmutzt, was insbesondere bei einer zahnmedizinischen Anwendung unerwünscht ist.

Es sei noch auf die DE 298 14 215 U1 verwiesen, aus der ein Zweikammerbehälter bekannt ist, dessen Kammern unterschiedliche Substanzen umfassen und über einen Steg getrennt sind. Die Kammern sind jeweils gebildet aus Näpfen in einem Tiefziehteil, welches von einer Deckfolie verschlossen ist, die auf dem Steg zwischen den Kammern so angesiegelt ist, dass bei Anwendung von Druck auf eine der Kammern die Verbindung zwischen den beiden Kammern durch Ablösen der Siegelfolie vom Steg hergestellt wird. In bevorzugten Ausgestaltungen umfassen die Behälter der DE 298 14 215 U1 eine peelbare Deckfolie und das Gemisch der zwei zuvor in den Kammern gelagerten Substanzen kann aus dem Behälter entnommen werden, indem die Deckfolie abgezogen wird. Die Deckfolie kann auch eine Öffnung aufweisen, die dann aber mit einer abziehbaren Abdeckfolie verschlossen ist, so dass die Handhabung der Behälter sich nicht wesentlich verändert. Der in der DE 298 14 215 U1 beschriebene Behälter ist nachteiligerweise nicht zur Handhabung sehr kleiner Flüssigkeitsmengen geeignet, da beim Abziehen der Deck- oder Abdeckfolie ein unkontrollierter Verlust an Substanzgemisch erfolgen kann, indem dieses an der abgezogenen Folie anhaftet. Die Anwendung des Behälters wäre somit bei kleinen Substanzmengen unsauber und auch ungenau.

Aus der WO 00/09416 ist ein Zweikammer behälter nach dem Oberbegriff des Anspruchs 1 bekannt.

Die Aufgabe der vorliegenden Erfindung ist es dementsprechend, eine Verpackung zum Lagern zumindest zweier Substanzen in separaten Kammern anzugeben, die eine einfache Handhabung insbesondere beim Vermischen und Entnehmen geringer Mengen fließfähiger Substanz ermöglicht. Insbesondere sollte es möglich sein, mit wenigen einfachen Handgriffen die Substanzen eines Mehrkomponentensystems (z.B. -zwei in benachbarten Kammern gelagerte Substanzen) zu vermischen und das resultierende Substanzgemisch (sauber) zu entnehmen.

Erfindungsgemäß wird diese Aufgabe gelöst durch Angabe einer Verpackung zum Lagern zumindest zweier Substanzen in separaten Kammern gemäß Anspruch 1, umfassend:
eine erste Kammer, die eine fließfähige erste Substanz enthält, und eine zweite Kammer, wobei
die erste Kammer und die zweite Kammer jeweils aus flüssigkeitsdicht aneinandergesiegelten Abschnitten einer (einzigen) Bodenfolie und einer (einzigen) Deckfolie gebildet sind,
in einem die erste Kammer und die zweite Kammer verbindenden Bereich die Bodenfolie und die Deckfolie so (unter Ausbildung eines selektiv zu öffnenden Durchgangsbereiches) aneinandergesiegelt sind, dass durch Ausübung eines Druckes von außen auf die erste Kammer (a) sich in dem besagten Bereich selektiv die Siegelverbindung zwischen den Folien lösen, (b) ein Durchtrittskanal zwischen der ersten und der zweiten Kammer bilden und (c) die erste Substanz aus der ersten in die zweite Kammer überführt werden kann, und
gegebenenfalls die Deckfolie in einem der zweiten Kammer zugeordneten Bereich eine Materialschwächung besitzt, so dass sie in diesem Bereich leichter durchstoßbar ist als in benachbarten Bereichen ohne Materialschwächung.

Häufig wird in der zweiten Kammer einer erfindungsgemäßen Verpackung eine zweite Substanz vorgesehen sein, die gemeinsam mit der fließfähigen ersten Substanz ein Zwei-Komponenten-System bildet, das durch Vermischen der ersten und der zweiten Substanz in seinen Anwendungszustand überführt, d.h. aktiviert wird. In Ausnahmefällen kann sich die zweite Substanz jedoch zunächst auch in einer dritten Kammer befinden, aus der sie beispielsweise über eine weitere selektiv lösbare Siegelverbindung in die zweite Kammer überführt werden kann.

Erste und zweite Kammer einer erfindungsgemäßen Verpackung sind wie erwähnt aus flüssigkeitsdicht aneinandergesiegelten Abschnitten einer Bodenfolie und einer Deckfolie gebildet. Üblicherweise sind dabei die erste und die zweite Kammer von einem gemeinsamen Siegelrand zwischen Bodenfolie und Deckfolie umgeben, in dem eine hohe Siegelfestigkeit besteht. In manchen Fällen ist es vorteilhaft, die Siegelung zwischen Bodenfolie und Deckfolie nicht nur flüssigkeitsdicht sondern auch gasdicht auszugestalten, insbesondere, wenn in der ersten und/oder der zweiten Kammer ein leicht verdampfbares Lösungsmittel enthalten ist.

Die Bodenfolie ist vorzugsweise ein Tiefziehfolie, in der Mulden oder Näpfe ausgebildet sind, welche das Volumen der ersten und zweiten Kammer bestimmen.

Erfindungsgemäß ist, dass die Deckfolie eine Verbundfolie ist, umfassend eine erste Sperrfolie aus einem metallischen Werkstoff, und dass die Bodenfolie eine Verbundfolie ist, umfassend eine zweite Sperrfolie aus einem metallischen Werkstoff, wobei der metallische Werkstoff der zweiten Sperrfolie weicher ist als der der ersten Sperrfolie.

Die erfindungsgemäße und insbesondere die bevorzugte Ausgestaltung der Deckfolie bewirkt, dass auch kleine, frisch vermischte Substanzmengen mit wenigen Handgriffen sauber und kontrolliert aus der erfindungsgemäßen Verpackung entnommen werden können. Wichtig für die Erfindung kann gegebenenfalls das Vorsehen einer Materialschwächung in der Deckfolie in einem der zweiten Kammer zugeordneten Bereich sein. Der Ort der Materialschwächung definiert eine Sollbruchstelle in der Deckfolie und ermöglicht es, die Deckfolie gezielt mit einem geeigneten Applikationsgerät zu durchstoßen, um Substanz (in der Regel ein unmittelbar zuvor hergestelltes Substanzgemisch) aus der zweiten Kammer (Entnahmekammer) zu entnehmen.

Von hoher Bedeutung für die bevorzugte Ausgestaltungsform der erfindungsgemäßen Verpackung ist dabei das Verhältnis der Härte des metallischen Werkstoffes der ersten Sperrfolie zu der des Werkstoffs der zweiten Sperrfolie: Einerseits muss die zweite Sperrfolie als Teil der Bodenfolie verformbar sein, da in der Bodenfolie vorzugsweise die Mulden oder Näpfe ausgebildet sind (vorzugsweise durch Tiefziehverfahren), die das Volumen der separaten Kammern der erfindungsgemäßen Verpackung bestimmen. Andererseits muss die Deckfolie - und damit gegebenenfalls auch der metallische Werkstoff der ersten Sperrfolie - möglichst gut durchstoßbar sein, weshalb sie möglichst wenig nachgiebig sein sollte. Das beschriebene Härteverhältnis der Werkstoffe der Sperrfolien zueinander bewirkt auch eine besonders erhöhte Entnahmesicherheit: Falls ein zum Durchstoßen der Deckfolie verwendetes Werkzeug mit soviel Kraft eingesetzt wird, dass es nach dem Durchstoßen der Deckfolie auch auf die Bodenfolie trifft, so reagiert diese aufgrund ihrer vergleichsweise geringen Härte zunächst mit Verformung, was ein Durchstoßen der Bodenfolie wirksam erschwert. Damit bestehen die oben angegebenen Nachteile der Verpackungen aus dem Stand der Technik bei der erfindungsgemäßen Verpackung insbesondere in ihrer bevorzugten Ausführungsform nicht.

Ein weiterer Vorteil einer weichen Bodenfolie ist, dass sich die Kontur der tiefgezogenen zweiten Mulde beim Überführen der ersten Substanz von der ersten in die zweite Kammer verformen kann, da die zweite Kammer nach dem Überführen der Substanz ein entsprechend höheres Volumen aufnehmen muss. Diese Aufgabe kann zusätzlich dadurch unterstützt werden, dass die zweite Kammer in einer faltenbalg- oder wellenähnlichen Weise ausgestaltet ist. Die Weichheit der zweiten Sperrfolie ermöglicht es in diesem Fall, dass sich diese nach der Verformung durch das Einströmen der ersten Substanz nicht wesentlich zurück stellt. Somit wird ein unerwünschter erhöhter Innendruck in der zweiten Kammer vermieden.

Die Deckfolie einer erfindungsgemäßen Verpackung muss zwei an sich gegensätzliche Aufgaben gleichzeitig erfüllen. Einerseits soll sie nämlich so an die Bodenfolie angesiegelt werden können, dass sich der selektiv zu öffnende Durchgangsbereich bilden kann, d.h. der Bereich, in dem durch Ausübung eines Druckes von außen auf die erste Kammer die Siegelverbindung zwischen den Folien gelöst, ein Durchtrittskanal gebildet und die erste Substanz aus der ersten in die zweite Kammer überführt werden kann. Andererseits soll die Deckfolie in einem der zweiten Kammer zugeordneten Bereich leicht durchstoßbar sein. Die Siegelfestigkeit in dem die erste Kammer und die zweite Kammer verbindenden selektiv zu öffnender Durchgangsbereich kann man als "peelfähig" bezeichnen, so dass man zunächst auf die Idee hätte kommen können, eine übliche peelbare Folie auf der Bodenfolie anzusiegeln. Dem Fachmann ist allerdings klar, dass peelbare Folien in diesem Einsatzfall eine gewisse Mindestfestigkeit aufweisen müssen, um nicht beim ausüben des Druckes auf die erste Kammer ungewollt an der Außenseite aufzureißen, was im Widerspruch zur geforderten leichten Durchstoßbarkeit steht, so dass er diesen Gedanken sogleich wieder verworfen hätte. Erfindungsgemäß wird dieser Widerspruch überwunden, indem zwar in dem selektiv zu öffnenden Durchgangsbereich zwischen erster und zweiter Kammer eine peelfähige Verbindung hoher Festigkeit hergestellt wird, wie sie oben definiert ist, die Deckfolie aber andererseits bewusst mit einer Materialschwächung versehen wird, so dass sie in einem der zweiten Kammer zugeordneten Bereich vergleichsweise leicht durchstoßen werden kann.

Bevorzugt ist eine erfindungsgemäße Verpackung so gestaltet, dass die Deckfolie eine erste Siegelschicht (z.B. Lack oder Folie) umfasst, die Bodenfolie eine zweite Siegelschicht (z.B. Lack oder Folie) umfasst und die zweite Siegelschicht dicker ist als die erste Siegelschicht und an diese angesiegelt ist.

Im Rahmen dieses Textes umfasst der Begriff "Siegelschicht" insbesondere Siegelfolien aber zum Beispiel auch Schichten aus Siegellack. Die bevorzugte Stärke der zweiten Siegelschicht beträgt dabei < 100 µm, besonders bevorzugt ≤20 µm.

Bevorzugt ist eine erfindungsgemäße Verpackung so gestaltet, dass eine verstärkte, z.B. mehrfache, insbesondere doppelte Schweißnaht im Bereich des gemeinsamen Randes um die Kammern gesetzt ist. Die Verstärkung der Schweißnaht kann auch darauf beruhen, dass sie unter anderen Bedingungen (Temperatur, Druck, Siegeldauer) gesiegelt wurde als der übrige Bereich der Siegelung zwischen Deck- und Bodenfolie.

Bevorzugt ist auch eine erfindungsgemäße Verpackung, die dadurch gekennzeichnet ist, dass eine einfache Schweißnaht in dem die erste Kammer und die zweite Kammer verbindenden Bereich gesetzt ist.

Durch eine sinnvolle Auswahl der Geometrie der Schweißnähte ist es möglich, die erfindungsgemäßen Verpackungen besonders gut an ihre Aufgabe anzupassen. So führt eine verstärkte Schweißnaht im Bereich des gemeinsamen Randes um die Kammern dazu, dass ein Entweichen des Inhaltes der Kammern aus einer Seite der erfindungsgemäßen Verpackung selbst bei Druckausübung, wie sie für die Öffnung des Durchtrittkanals zwischen den Kammern notwendig ist, wirkungsvoll erschwert wird. Insbesondere in der Verbindung der verstärkten Schweißnaht in dem die Kammern umgebenden Bereich mit einer einfachen Schweißnaht in dem die erste und die zweite Kammer verbindenden Bereich wird damit dem Materialstrom von der ersten Kammer in die zweite Kammer bei Eröffnung des Durchgangsbereiches eine eindeutige Richtung gegeben.

Zur Verwendung in erfindungsgemäßen Verpackungen bevorzugte Deckfolien sind Verbundfolien, umfassend:
- eine erste Siegelschicht (z.B. Siegelfolie oder -lack), die an die Bodenfolie angesiegelt ist,
- eine erste Sperrfolie sowie gegebenenfalls
- eine Stabilisierungsfolie.

Eine erste Siegelfolie, die an die Bodenfolie angesiegelt ist, besteht vorteilhafterweise aus einem Polyolefin oder einem Copolymer verschiedener Polyolefine. Bevorzugt sind Polypropylen und Polyethylen sowie deren Copolymere. Als besonders vorteilhaft hat sich die Verwendung einer Siegelfolie aus Polypropylen erwiesen, die eine Dicke im Bereich zwischen 15 und 25 µm besitzt; eine Dicke von 20 µm ist bevorzugt. Die Wahl des Siegelfolienmaterials und der Siegelfoliendicke ist angepasst an die Ausgestaltung der ersten Sperrfolie. Die angegebenen bevorzugten Ausgestaltungen der ersten Siegelfolie sind insbesondere zur Verbindung mit einer ersten Sperrfolie aus Aluminium oder einem anderen metallischen Werkstoff geeignet. Es sei darauf hingewiesen, dass Polypropylen-Folien, die dicker als 30 mm sind, nicht mehr leicht durchstoßbar sind und deshalb zur Herstellung einer erfindungsgemäßen Verpackung nur in Ausnahmefällen taugen. Polyolefin-Schichten mit einer Dicke von weniger als 20 µm lassen sich - wie eigene Untersuchungen nun gezeigt haben - nicht besonders gut mit einer Aluminium-Sperrfolie verbinden.

Vorzugsweise besteht die erste Sperrfolie aus einem metallischen Werkstoff wie Aluminium, wobei Hart-Aluminium aufgrund einer guten Durchstoßbarkeit bevorzugt ist. Insbesondere bei Verwendung von Hart-Aluminium ist eine Sperrfoliendicke im Bereich zwischen 15 und 30 µm bevorzugt, eine Dicke von 20 µm hat sich als besonders geeignet erwiesen. Die Verwendung dünnerer Aluminiumfolien wäre grundsätzlich interessant; jedoch sind Aluminiumfolien mit einer Dicke unterhalb von 20 µm (insbesondere unterhalb von 15 µm) nicht sicher porenfrei und somit als Sperrfolie (Barriereschicht) heutzutage noch inakzeptabel. Aluminiumschichten mit einer Dicke von mehr als 30 µm sind nicht mehr leicht durchstoßbar und deshalb allenfalls in Ausnahmefällen als Sperrfolie geeignet.

Die erste Siegelschicht (z.B. Folie oder Lack) und die erste Sperrfolie (jeweils insbesondere in ihren vorstehend erläuterten bevorzugten Ausgestaltungen) werden regelmäßig unter Verwendung eines lösungsmittelbeständigen Haftvermittlers miteinander verbunden.

Besteht die erste Sperrfolie aus einem metallischen Werkstoff, so wird in der Regel eine Einbrennlackierung als Korrosionsschutz auf der von der ersten Siegelschicht (z.B. Folie oder Lack) abgewandten Seite der Sperrfolie angebracht. Die Einbrennlackierung muss dabei in der Regel hitzebeständig sein, denn beim Ansiegeln der Deckfolie an die Bodenfolie wird die Wärme von der der Bodenfolie gegenüberliegenden Seite der Deckfolie eingebracht.

Die in einer bevorzugten Deckfolie (Verbundfolie) im Bedarfsfall vorgesehene Stabilisierungsfolie erfüllt primär den Zweck, den Verbund aus erster Siegelfolie und erster Sperrfolie gegen ein unbeabsichtigtes Einreißen zu stabilisieren. Die Stabilisierungsfolie kann aber natürlich auch eine sekundäre Funktion erfüllen und beispielsweise als ein Etikett ausgestaltet sein, das mit einer Text- und/oder Bildinformation versehen und beispielsweise aus Papier, Klebstoff und einer Farbschicht gebildet ist.

Die gegebenenfalls vorhandene Materialschwächung (Sollbruchstelle) in der Deckfolie in dem der zweiten Kammer zugeordneten Bereich kann auf unterschiedliche Weise erzeugt werden:

Gemäß einer ersten alternativen Ausgestaltung ist die Deckfolie in dem der zweiten Kammer zugeordneten Bereich dünner als in benachbarten (nicht geschwächten) Bereichen der Deckfolie. Dies kann erreicht werden, indem die erste Siegelschicht (z.B. Folie oder Lack) und/oder die erste Sperrfolie und/oder die Stabilisierungsfolie (falls vorhanden) in dem besagten Bereich dünner sind als in benachbarten Bereichen.

Gemäß einer zweiten alternativen Ausgestaltung, welche eine als Verbundfolie ausgestaltete Deckfolie betrifft, ist eine Stabilisierungsfolie vorgesehen, die bei ansonsten gleichbleibender Dicke in dem der zweiten Kammer zugeordneten Bereich eine Aussparung besitzt. Während also außerhalb der Sollbruchstelle die Deckfolie z.B. als Verbund aus erster Siegelfolie, erster Sperrfolie und Stabilisierungsfolie ausgestaltet ist, fehlt im Bereich der Sollbruchstelle die Stabilisierungsfolie (sie besitzt dort eine Aussparung), was die erfindungsgemäße Materialschwächung hervorruft.

Gemäß einer dritten alternativen Ausgestaltung sind in der Deckfolie in dem der zweiten Kammer zugeordneten Bereich eine Einprägung oder ein Einschnitt vorgesehen.

Weitere alternative Ausgestaltungen sowie Kombinationen der vorgenannten Alternativen sind möglich.

Es wurde bereits ausgeführt, dass in einer erfindungsgemäßen Verpackung die erste und die zweite Kammer aus aneinandergesiegelten Abschnitten einer (einzelnen) Bodenfolie und einer (einzelnen) Deckfolie gebildet sind. Ferner wurde bereits ausgeführt, dass die Siegelung in einem die erste und die zweite Kammer gemeinsam umgebenden Randbereich vorzugsweise besonders fest ausgebildet ist. Im Vergleich zu dieser festen Siegelung ist die Siegelung zwischen Bodenfolie und Deckfolie in dem die erste Kammer und die zweite Kammer verbindenden Bereich vorteilhafterweise so geschwächt, dass die selektive Öffnung des Durchtrittsbereiches zwischen der ersten und der zweiten Kammer möglich ist, d.h. eine Öffnung des Durchtrittsbereiches ohne Zerstörung der Siegelung im Bereich des gemeinsamen Randes der Kammern.

Eine derartige Schwächung der Siegelung im Bereich der Durchtrittsöffnung lässt sich durch verschiedene Maßnahmen erreichen.

So können beispielsweise Fremdpartikel (und insbesondere Peelfolienstanzlinge) in dem geschwächten Siegelbereich angeordnet sein. Alternativ und/oder zusätzlich kann in dem zu schwächenden Bereich vor dem Erzeugen der Siegelung eine das Siegeln von Bodenfolie und Deckfolie beeinträchtigende Substanz auf Boden- und/oder Deckfolie appliziert worden sein. Weiter alternativ oder zusätzlich kann die Siegelung durch ein Verschweißen von Boden- und Deckfolie erzeugt werden, wobei in dem die erste Kammer und die zweite Kammer verbindenden Bereich die Schweißtemperatur und/oder der Pressdruck beim Verschweißen und/oder die Schweißzeit anders ist als in benachbarten Bereichen; der Fachmann wird die Schweißbedingungen unter Berücksichtigung der zu verschweißenden Materialien anhand üblicher Überlegungen auswählen. Weiter alternativ oder zusätzlich kann zum Schwächen der Siegelung in dem die erste Kammer und die zweite Kammer verbindenden Bereich eine andere Siegelungsgeometrie vorgesehen werden als in benachbarten Bereichen; beispielsweise kann im Bereich des gemeinsamen Randes um die Kammern eine doppelte Schweißnaht und in dem die Kammern verbindenden Bereich eine lediglich einfache Schweißnaht gesetzt werden. Auch die Gestaltung des Schweißnahtquerschnitts ist ein geeignetes Mittel, um lokal unterschiedliche Siegelungsfestigkeiten zu erzeugen.

Die Bodenfolie einer erfindungsgemäßen Verpackung, welche die Näpfe oder Mulden umfasst, die das Volumen der ersten und zweiten Kammer im Wesentlichen definieren, umfasst vorzugsweise
- eine zweite Siegelschicht (z.B. Folie oder Lack), die an die Deckfolie angesiegelt ist,
- eine zweite Sperrfolie sowie gegebenenfalls
- eine Außenfolie.

Die zweite Siegelschicht (z.B. Folie oder Lack) ist, wenn auch die Deckfolie als Verbundfolie ausgestaltet ist, an die erste Siegelschicht (z.B. Folie oder Lack) angesiegelt. Die zweite Siegelfolie besteht vorteilhafterweise ebenso wie die erste Siegelfolie aus einem Polyolefin oder einem Copolymer verschiedener Polyolefine. Polyethylen, Polypropylen und deren Copolymere sind wiederum bevorzugt. Die zweite Siegelfolie sollte jedoch dicker sein als die erste Siegelfolie, wobei Dicken im Bereich zwischen 40 und 140 µm vorteilhaft und Dicken im Bereich zwischen 40 und 80 µm bevorzugt sind und eine Dicke von 60 µm besonders vorteilhaft ist. Erste und zweite Siegelfolie können aus den gleichen oder unterschiedlichen Materialien gebildet sein. Die Verwendung unterschiedlicher Materialien kann zur Herstellung einer peelfähigen Verbindung vorteilhaft sein.

Die zweite Sperrfolie besteht ebenso wie die erste Sperrfolie einer bevorzugten Deckfolie vorteilhafterweise aus einem metallischen Werkstoff wie Aluminium. Der metallische Werkstoff sollte aber Erfindungsgemäß weicher sein als der metallische Werkstoff der ersten Sperrfolie der Deckfolie, denn er wird regelmäßig bei der Erzeugung der Mulden (Näpfe) in der Bodenfolie verformt. Die zweite Sperrfolie besitzt vorzugsweise eine Dicke im Bereich zwischen 35 und 55 µm und vorzugsweise eine Dicke von 45 µm.

Zwischen zweiter Siegelfolie und zweiter Sperrfolie ist üblicherweise ein Haftvermittler angeordnet, der auch als Kaschierlack bezeichnet werden kann und lösungsmittelbeständig ist.

Die ggf. vorhandene Außenfolie der Verburid-Bodenfolie besteht vorzugsweise aus Polyamid Und vorteilhafterweise aus orientiertem Polyamid. Die Außenfolie besitzt in vielen Fällen eine Dicke im Bereich zwischen 20 und 30 µm, wobei eine Dicke von 25 µm bevorzugt ist. Die Außenfolie soll die Bodenfolie insgesamt stützen und deren vorzeitiges Reißen verhindern. Sie trägt zudem zu einer besseren Verformbarkeit der Bodenfolie bei, insbesondere wenn die bevorzugten Materialien eingesetzt werden.

Zwischen Außenfolie und zweiter Sperrfolie ist üblicherweise ein Haftvermittler angeordnet, der auch als Kaschierlack bezeichnet werden kann und nicht notwendigerweise lösungsmittelbeständig ist.

Gemäß einem weiteren wichtigen Aspekt besitzt die Bodenfolie einer erfindungsgemäßen Verpackung vorteilhafterweise eine Standfläche, die dem Bereich der Deckfolie, in dem diese eine Materialschwächung besitzt, gegenüberliegt und so ausgestaltet ist, dass die Verpackung nach oder während des Durchstoßens des materialgeschwächten Bereiches auf einer horizontalen Fläche abgestellt werden kann, ohne dass eine fließfähige Substanz aus der zweiten Kammer in die Umgebung austreten kann. Eine derartige Ausgestaltung einer erfindungsgemäßen Verpackung bringt weitere Vorteile im Vergleich mit den eingangs erwähnten Verpackungen aus dem Stand der Technik mit sich. Insbesondere bei der aus der EP 895 943 B1 bekannten Verpackung wird es nämlich als nachteilig empfunden, dass sie nach der Entnahme von Substanz mit Hilfe des Auftragsinstruments (Applikationsgerät) nicht auf einer horizontalen Fläche abgelegt werden kann, ohne dass insbesondere bei niederviskosen Substanzen die Gefahr besteht, dass ggf. in der Verpackung zurückgebliebene Restsubstanz nun aus dieser herausläuft.

Auch die Ausgestaltung der Verpackungen gemäß EP 1 153 579 A2 erlaubt nicht eine sichere Ablage nach Öffnen der Kammern, die Substanz enthalten. Die mit einer Standfläche versehene erfindungsgemäße Verpackung kann hingegen nach dem Durchstoßen der Deckfolie im Bereich der zweiten Kammer auf einer horizontalen Fläche abgestellt werden, ohne dass eine Substanz aus der Verpackung auslaufen und die Umgebung verschmutzen kann; dies gilt auch für sehr dünnflüssige Substanzen.

Ein erfindungsgemäßes Verfahren zum Herstellen eines direkt applizierbaren Gemisches zweier Substanzen umfasst die folgenden Schritte:
- Bereitstellen einer erfindungsgemäßen Verpackung, wobei die zweite Kammer eine zweite Substanz enthält,
- Ausüben eines Druckes von außen auf die erste Kammer, so dass (a) sich in dem selektiv zu öffnenden Durchgangsbereich selektiv die Siegelverbindung zwischen den Folien löst, (b) ein Durchtrittskanal zwischen der ersten und der zweiten Kammer gebildet wird und (c) die erste Substanz aus der ersten in die zweite Kammer überführt und in Kontakt mit der zweiten Substanz gebracht wird,
- Durchstoßen der Deckfolie in dem der zweiten Kammer zugeordneten Bereich, der eine Materialschwächung besitzt,
- Vermischen der ersten und der zweiten Substanz vor oder nach dem Durchstoßen der Deckfolie,
- Entnehmen des Gemisches aus erster und zweiter Substanz aus der zweiten Kammer.

Zum Durchstoßen der Deckfolie kann dabei insbesondere ein Applikationsgerät mit einer Applikationsspitze verwendet werden, das auch vorteilhaft zum Vermischen der ersten und der zweiten Substanz in der zweiten Kammer und zum Entnehmen des Gemisches aus erster und zweiter Substanz aus der zweiten Kammer verwendet werden kann.

Für das Vermischen der ersten und der zweiten Substanz kann nach dem Durchstoßen der Deckfolie ein gegebenenfalls eingesetztes Durchstoßwerkzeug oder auch ein Applikationswerkzeug, welches die vermischten Substanzen ihrer bestimmungsgemäßen Verwendung zuführt, benutzt werden. Das Vermischen kann aber auch - insbesondere wenn es vor dem Durchstoßen der Deckfolie erfolgt - nach Öffnen des Durchtrittskanals ohne oder mit nur unwesentlicher Einwirkung von außen auf die erfindungsgemäße Verpackung erfolgen, durch z. B. Schütteln.

Die Erfindung wird nachfolgend anhand von Ausführungsbeispielen unter Bezugnahme auf die beigefügten Figuren erläutert.

Es stellen dar:
- Fig. 1a-c: erfindungsgemäße 2-Kammer-Verpackung in verschiedenen Ansichten;
- Fig. 2a, a', b, b', c: schematische Darstellung des Ablaufs eines erfindungsgemäßen Verfahrens (in zwei Varianten) anhand einer erfindungsgemäßen 2-Kammer-Verpackung;
- Fig. 3: erfindungsgemäße 3-Kammer-Verpackung im Querschnitt; und
- Fig. 4: Anordnung mehrerer seitlich miteinander verbundener erfindungsgemäßer 2-Kammer-Verpackungen in der Draufsicht.

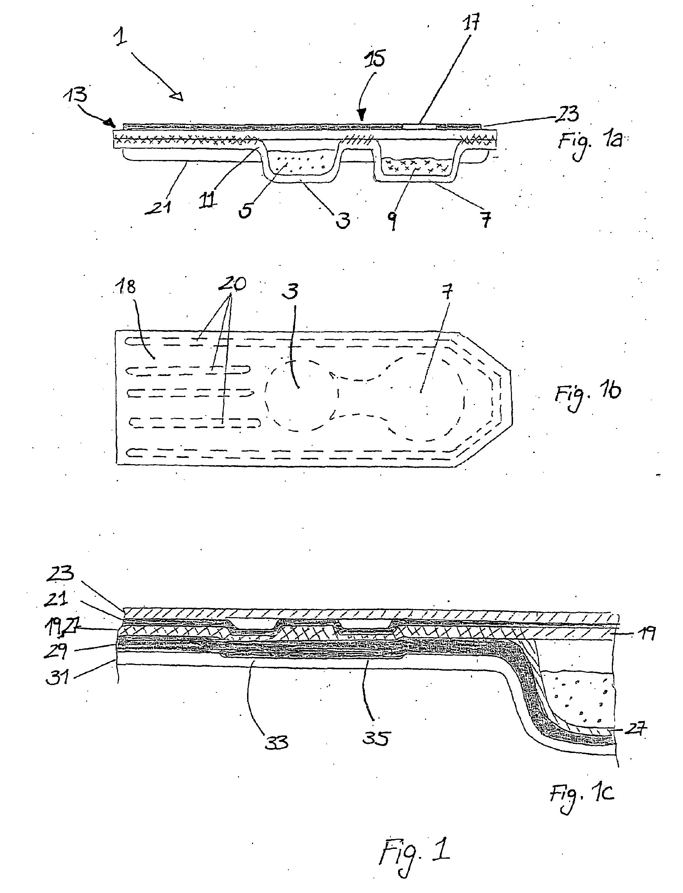

In den Figuren 1 a-d ist eine erfindungsgemäße 2-Kammer-Verpackung in verschiedenen Ansichten dargestellt.

Die in Figur 1a im seitlichen Querschnitt dargestellte Verpackung 1 umfasst eine erste Kammer 3, die eine fließfähige erste Substanz 5 umfasst, sowie eine zweite Kammer 7, die eine zweite Substanz 9 enthält.

Erste Kammer 3 und zweite Kammer 7 sind aus flüssigkeits- und gasdicht aneinandergesiegelten Abschnitten einer Bodenfolie 11 und einer Deckfolie 13 gebildet. In einem die erste Kammer 3 und die zweite Kammer 7 verbindenden selektiv zu öffnenden Durchgangsbereich 15 sind Bodenfolie 11 und Deckfolie 13 peelfähig aneinandergesiegelt. In einem der zweiten Kammer 7 zugeordneten Bereich 17 besitzt die Deckfolie 13 eine Materialschwächung, so dass sie in diesem Bereich leichter durchstoßbar ist als in benachbarten Bereichen; hierauf wird nachfolgend im Detail eingegangen.

Die Verpackung 1 besitzt einen Griffabschnitt 18 mit Stegen 20, die zur Versteifung des Griffabschnitts 18 dienen und sich von dort aus teilweise seitlich an den Kammern 3, 7 vorbei und um diese herum erstrecken.

Aus der Draufsicht gemäß Figur 1b lassen sich weitere Einzelheiten entnehmen, wobei gestrichelte Linien die Konturen von durch die Deckfolie verdeckten Elementen der dargestellten Verpackung illustrieren. Erkennbar ist, dass die erste Kammer 3 einen geringeren Durchmesser besitzt als die zweite Kammer 7; das Innenraumvolumen der ersten Kammer beträgt ca. 1 ml, das Innenraumvolumen der zweiten Kammer ca. 2 ml. In anderen, nicht dargestellten Ausführungsbeispielen kann das Volumen der ersten und der zweiten Kammer deutlich reduziert sein, da insbesondere im medizinischen oder zahnmedizinischen Bereich häufig die Anmischung und Applikation einer sehr geringen Substanzmenge im Bereich von ca. 0,01 bis 1 ml erforderlich ist.

Sowohl die Bodenfolie 11 als auch die Deckfolie 13 sind Verbundfolien. Ihr Aufbau lässt sich insbesondere der Detailansicht gemäß Figur 1 c entnehmen.

Die Deckfolie 13 umfasst eine erste Siegelschicht (Folie oder Lack) 19, die an die Bodenfolie 11 angesiegelt ist. Die erste Siegelschicht (Folie oder Lack) besteht aus Polyethylen oder Polypropylen und besitzt eine Dicke von 20 µm. Mittels eines nicht dargestellten lösungsmittelbeständigen Haftvermittlers ist die erste Siegelschicht (Folie oder Lack) mit einer ersten Sperrfolie 21 aus Hart-Aluminium verbunden, die eine Dicke von 20 µm besitzt.. Auf diese aufgeklebt ist eine Stabilisierungsfolie 23.

Die Bodenfolie (Tiefziehfolie) 11 umfasst eine zweite Siegelschicht (Folie oder Lack) 27 aus Polyethylen oder Polypropylen, die eine Dicke von 60 µm besitzt. Über einen nicht dargestellten lösungsmittelbeständigen Haftvermittler ist die Polypropylenschicht 27 mit einer weichen, gut deformierbaren Aluminiumfolie 29 verbunden, welche eine Dicke von 45 µm besitzt. Diese Aluminiumfolie ist mittels eines Haftvermittlers (auch als Kaschierlack bezeichnet) mit einer Außenfolie 31 aus orientiertem Polyamid verbunden, welche eine Dicke von 25 µm besitzt und deren Aufgabe es ist, die Bodenfolie 11 insgesamt zu stabilisieren, ein vorzeitiges Reißen zu verhindern und die Verformbarkeit der Bodenfolie (Tiefziehfolie) zu erhöhen.

Die Stabilisierungsfolie 23 ist auf die erste Sperrfolie 21 der Deckfolie aufgeklebt worden, nachdem der Verbund zwischen erster Siegelfolie 19 und zweiter Siegelfolie 27 durch Verschweißen hergestellt wurde. In der Detailansicht gemäß Figur 1c sind im Bereich des Griffabschnitts 18 liegende Barrieren 33 und 35 zu erkennen, in denen die erste Siegelschicht (Folie oder Lack) 19, die erste Sperrfolie 21, die zweite Siegelschicht (Folie oder Lack) 27, die zweite Sperrfolie 29 und die Außenfolie 31 deformiert sind. Diese Deformation, die auf die Einwirkung eines entsprechenden Siegelwerkzeugs zurückgeht, bewirkt einen besonders starken Siegelverbund und eine Barrierewirkung gegenüber dem Austritt leicht flüchtiger Substanzen aus den Kammern 3 bzw. 7. Die Barrieren 33 und 35 laufen um beide Kammern 3, 7 herum. Zwischen den Barrieren 33 und 35 ist die Siegelschicht insbesondere etwas dicker ausgebildet und bildet eine Art Siegelrand, in dem eine mechanische Lösung der Siegelung nur sehr schwer möglich ist (keine Peelfähigkeit).

In dem selektiv zu öffnenden Durchgangsbereich 15 zwischen der ersten Kammer 3 und der zweiten Kammer 7 ist die Siegelung zwischen Bodenfolie 11 und Deckfolie 13 im Vergleich mit den Siegelbereichen (Barrieren) 33, 35 geschwächt. Die Festigkeit der Siegelung im Durchgangsbereich 15 entspricht der einer peelfähigen Verbindung.

Die Materialschwächung der Deckfolie 13 beruht, wie sich insbesondere aus Figur 1a ergibt, auf dem Vorhandensein einer Aussparung in der Stabilisierungsfolie 23, die genau oberhalb der zweiten Kammer 7 liegt. Im Bereich der Aussparung ist die zweite Kammer. 7 also lediglich durch die (dann außenliegende) erste Sperrfolie 21 und die erste Siegelschicht (Folie oder Lack) 19 von der Umgebung getrennt. Da die erste Siegelschicht (Folie oder Lack) 19 und die erste Sperrfolie 21 jeweils sehr dünn ausgelegt sind, lässt sich die Deckfolie im Bereich der Aussparung vergleichsweise leicht mittels eines üblichen Applikationsgerätes durchstoßen.

Die gesamte Vorrichtung ist so konstruiert, das sich aus der Außenkontur zusammen mit den Stegen und Kammer(n) eine Standfläche ergibt. Der Standflächenabschnitt der Bodenfolie im Bereich der zweiten Kammer 7 liegt dabei dem Bereich der Deckfolie 13 gegenüber, in dem diese die Aussparung (Materialschwächung) besitzt. Aufgrund des Vorhandenseins der Standfläche(n) kann die Verpackung 1 sowohl vor als auch nach oder während des Durchstoßens des materialgeschwächten Bereiches 17 auf einer horizontalen Fläche abgestellt werden, ohne dass eine Flüssigkeit oder ein Feststoff aus der zweiten Kammer 7 in die Umgebung austreten kann.

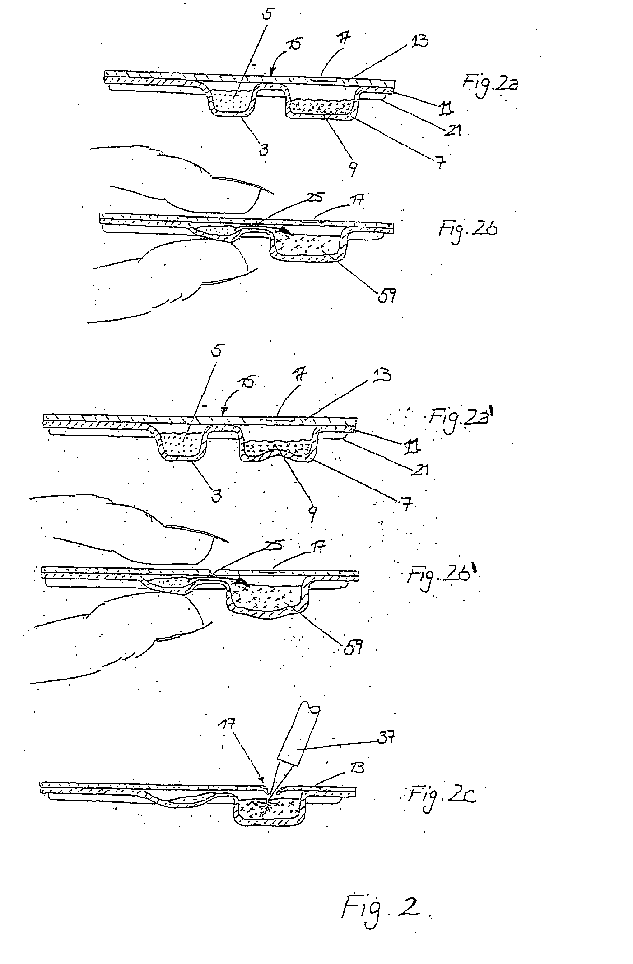

Anhand der Figuren 2a, 2b und 2c ist gezeigt, wie die in den Figuren 1a-1c dargestellte Verpackung benutzt wird. Die Figuren 2a' und 2b' beziehen sich auf eine in Figuren 1a-1c nicht gezeigte alternative Gestaltung. Fig. 2c schließt an Fig. 2b und 2b' an; die bestehenden Unterschiede in den alternativen Gestaltungen sind in Fig. 2c nicht mehr dargestellt. Der Unterschied zwischen Fig. 2a und 2a' sowie Fig. 2b und 2b' besteht jeweils darin, dass bei der in Fig. 2a' und 2b' dargestellten Verpackung der Boden der zweiten Kammer 7 wellenähnlich ausgestaltet ist, so dass sich bei. Erhöhen des Druckes innerhalb des Bereichs der zweiten Kammer 7 deren Boden nach außen ausdehnen kann, was eine Volumenvergrößerung im Bereich der zweiten Kammer bewirkt.

Figur 2a entspricht dabei Figur 1a, wobei der Übersichtlichkeit halber einige Bezugszeichen und Details weggelassen wurden. Figur 2a zeigt den Lagerzustand der erfindungsgemäßen Verpackung.

In Betrieb nimmt der Anwender die Verpackung im Bereich der ersten Kammer 3 in die Hand und übt beispielsweise mit Daumen und Zeigefinger einen Druck von außen auf die erste Kammer 3 aus, so dass sich im Bereich 15 die Siegelverbindung zwischen Bodenfolie 11 und Deckfolie 13 löst und ein Durchtrittskanal 25 zwischen der ersten und der zweiten Kammer 3 bzw. 7 gebildet wird. Die erste Substanz 5 wird durch den Druck in Richtung des Durchtrittskanals 25 und dann (in Pfeilrichtung) durch diesen hindurch in die zweite Kammer 7 transportiert, wo sie sich mit der zweiten Substanz vermischt. Aufgrund der nur geringen Substanzmengen ist ein weiteres Mischen (z.B. durch Schütteln oder Ähnliches) nicht erforderlich, sofern die zu vermischenden Substanzen 5 und 9 in dem Fachmann bekannter Weise aneinander angepasst sind.

Nach dem Vermischen der Substanzen 5 und 9 liegt in der zweiten Kammer ein Substanzgemisch 59 vor.

Zum Entnehmen dieses Substanzgemisches 59 aus der zweiten Kammer 7 wird mittels eines Applikationsgerätes 37, das eine -Spitze besitzt, die Deckfolie 13 im materialgeschwächten Bereich 15 durchstoßen, die Spitze des Applikationsgerätes in das Substanzgemisch 59 eingetaucht und das Applikationsgerät mit daran anhaftendem Substanzgemisch 59 wieder aus der zweiten Kammer herausgezogen. Um ein zu starkes Abstreifen des Substanzgemisches 59 vom Applikationsgerät 37 an den Rändern des beim Durchstoßen entstandenen Loches in der Deckfolie 13 zu verhindern, kann das Loch durch eine Rührbewegung des Applikationsgerätes 13 aufgeweitet werden. Eine Beschädigung oder sogar das Durchstoßen der Bodenfolie 11 wird dabei aufgrund der Dicke und Festigkeit dieser Folie vermieden. Die insbesondere in den Figuren 1a-b dargestellten Stege 20 stabilisieren die Verpackung in ausreichendem Maße, so dass die beim Durchstoßen der Deckfolie 13 aufgebrachte Kraft nicht zu einem Herunterknicken zwischen Daumen und Zeigefinger gehaltenen Verpackung 1 führt. Weitere Stabilität gewinnt die Verpackung natürlich durch die Stabilisierungsfolie 23 (in Figuren 2a-c nicht dargestellt).

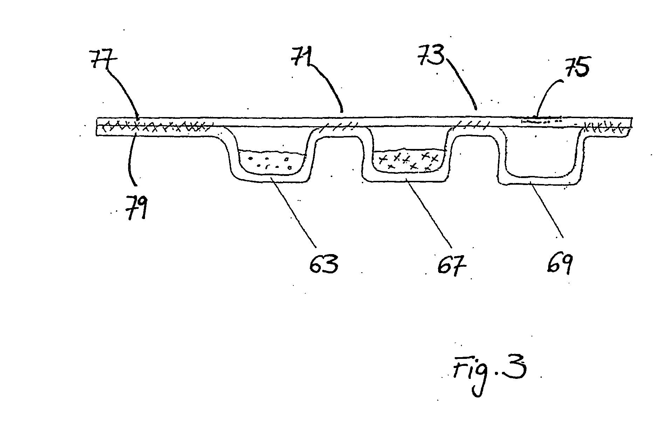

In Figur 3 ist eine erfindungsgemäße 3-Kammer-Verpackung im Querschnitt gezeigt, welche in einer ersten Kammer 63 und einer zweiten Kammer 67 miteinander zu vermischende Substanzen enthält, während eine dritte Kammer 69 im dargestellten Lagerzustand leer ist. Die Kammern 63 und 67 sind über einen selektiv zu öffnenden Durchgangsbereich 71 und die Kammern 67 und 69 über einen zweiten selektiv zu öffnenden Durchgangsbereich 73 miteinander verbunden. Der im Lagerzustand leeren, dritten Kammer 69 ist eine Sollbruchstelle 75 in einer wieder vorhandenen Deckfolie 77 zugeordnet. Die Deckfolie 77 bildet zusammen mit einer Bodenfolie 79 die in Figur 3 dargestellte Verpackung, wobei der Aufbau des Folienverbundes dem in der 2-Kammer-Verpackung entspricht, die in den Figuren 1 und 2 dargestellt ist.

Die in den Kammern 63 und 67 enthaltenen Substanzen können zunächst in Kammer 67 miteinander vermischt werden, nachdem der selektiv zu öffnende Durchgangsbereich 71 geöffnet wurde. Danach kann das entstandene Substanzgemisch in die Kammer 69 überführt werden, wozu der Durchgangsbereich 73 zu öffnen ist. Nach Durchstoßen des Bereiches 75 kann das Substanzgemisch aus der Kammer 69 entnommen werden.

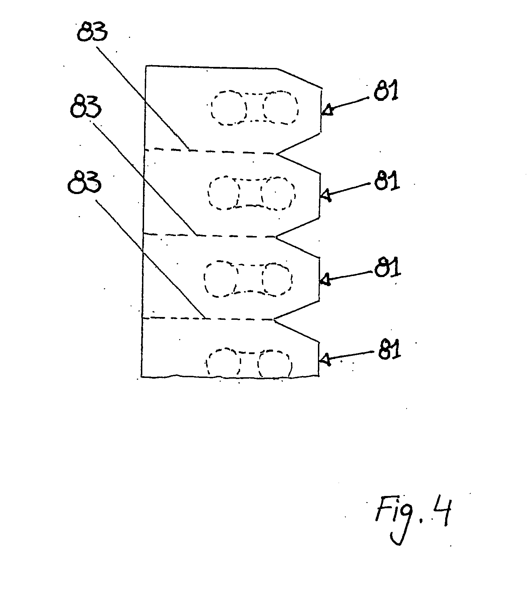

In Figur 4 ist ein Ensemble aus mehreren 2-Kammer-Verpackungen 81 gezeigt, die seitlich miteinander verbunden sind, wobei die Verbindungen 83 perforiert sind oder Sollbruchstellen aufweisen, so dass die einzelnen Verpackungen 81 bei Bedarf voneinander lösbar sind.

## Patentansprüche

1. Verpackung (1) zum Lagern zumindest zweier Substanzen in separaten Kammern, umfassend:
eine erste Kammer (3), die eine fließfähige erste Substanz (5) enthält und eine zweite Kammer (7), wobei
die erste Kammer (3) und die zweite Kammer (7) jeweils aus flüssigkeitsdicht aneinandergesiegelten Abschnitten einer Bodenfolie (11) und einer Deckfolie (13) gebildet sind,
die Deckfolie (13) eine Verbundfolie ist, umfassend eine erste Sperrfolie (21) aus einem metallischen Werkstoff,
die Bodenfolie (11) eine Verbundfolie ist, umfassend eine zweite Sperrfolie (29) aus einem metallischen Werkstoff, **dadurch gekennzeichnet, dass** der metallische Werkstoff der zweiten Sperrfolie (29) weicher ist als der der ersten Sperrfolie (21), so dass ein Durchstoßen der Bodenfolie wirksam erschwert wird,
in einem die erste Kammer (3) und die zweite Kammer (7) verbindenden Bereich (15) die Bodenfolie (11) und die Deckfolie (13) so aneinandergesiegelt sind, dass durch Ausübung eines Druckes von außen auf die erste Kammer (3) (a) sich in dem besagten Bereich (15) selektiv die Siegelverbindung zwischen den Folien (11, 13) lösen, (b) ein Durchtrittskanal (25) zwischen der ersten und der zweiten Kammer bilden und (c) die erste Substanz (5) aus der ersten in die zweite Kammer überführt werden kann, und
gegebenenfalls die Deckfolie (13) in einem der zweiten Kammer (7) zugeordneten Bereich (17) eine Materialschwächung besitzt, so dass sie in diesem Bereich leichter durchstoßbar ist als in benachbarten Bereichen ohne Materialschwächung.

2. Verpackung nach Anspruch 1, **dadurch gekennzeichnet, dass** die Deckfolie (13) eine erste Siegelschicht (19) umfasst, die Bodenfolie (11) eine zweite Siegelschicht (27) umfasst und die zweite Siegelschicht (27) dicker ist als die erste Siegelschicht (19) und an diese angesiegelt ist.

3. Verpackung nach Anspruch 1 oder 2, **dadurch gekennzeichnet, dass** eine verstärkte Schweißnaht im Bereich des gemeinsamen Randes um die Kammern (3,7) gesetzt ist.

4. Verpackung nach einem der vorangehenden Ansprüche, **dadurch gekennzeichnet, dass** eine einfache Schweißnaht in dem die erste Kammer (3) und die zweite Kammer (7) verbindenden Bereich gesetzt ist.

5. Verpackung nach einem der vorangehenden Ansprüche, **dadurch gekennzeichnet, dass** die Deckfolie (13) eine Stabilisierungsfolie (23) umfasst.

6. Verpackung nach einem der vorangehenden Ansprüche, **dadurch gekennzeichnet, dass** die gegebenenfalls vorhandene Materialschwächung der Deckfolie (13) auf einer oder mehreren der folgenden Maßnahmen basiert:
- einer verringerten Dicke der Deckfolie (13) in dem der zweiten Kammer (7) zugeordneten Bereich im Vergleich mit benachbarten Bereichen der Deckfolie,
- einer Ausgestaltung der Deckfolie als Verbundfolie gemäß Anspruch 5, wobei eine Stabilisierungsfolie (23) vorgesehen ist, die in dem der zweiten Kammer zugeordneten Bereich eine Aussparung besitzt,
- einer Einprägung oder einem Einschnitt in der Deckfolie in dem der zweiten Kammer zugeordneten Bereich.

7. Verpackung nach einem der vorangehenden Ansprüche, **dadurch gekennzeichnet, dass** die Siegelung zwischen Bodenfolie (11) und Deckfolie (13) in dem die erste Kammer (3) und die zweite Kammer (7) verbindenden Bereich (15) geschwächt ist.

8. Verpackung nach Anspruch 7, **dadurch gekennzeichnet, dass** die Siegelung zwischen Bodenfolie (11) und Deckfolie (13) in dem die erste Kammer und die zweite Kammer verbindenden Bereich aufgrund einer oder mehrerer der folgenden Maßnahmen geschwächt ist:
- Anordnung von Fremdpartikeln, vorzugsweise Peelfolienstanzlingen, in dem geschwächten Siegelbereich,
- vor dem Erzeugen der Siegelung Applizieren einer das Siegeln von Bodenfolie und Deckfolie beeinträchtigenden Substanz auf Bodenfolie und/oder Deckfolie in dem zu schwächenden Bereich,
- Erzeugung der Siegelung durch Verschweißen von Bodenfolie und Deckfolie, wobei in dem die erste Kammer und die zweite Kammer verbindenden Bereich die Schweißtemperatur und/oder der Pressdruck beim Verschweißen und/oder die Schweißzeit anders ist als in benachbarten Bereichen,
- Vorsehen unterschiedlicher Siegelungsgeometrien in (a) dem die erste Kammer und die zweite Kammer verbindenden Bereich und (b) benachbarten Bereichen.

9. Verpackung nach einem der vorangehenden Ansprüche, **dadurch gekennzeichnet, dass** die Bodenfolie (11) eine Außenfolie (31) umfasst.

10. Verpackung nach einem der vorangehenden Ansprüche, **dadurch gekennzeichnet, dass** die Bodenfolie (11) eine Standfläche besitzt, die dem Bereich der Deckfolie (13), in dem diese eine Materialschwächung besitzt, gegenüberliegt und so ausgestaltet ist, dass die Verpackung nach oder während des Durchstoßens des materialgeschwächten Bereiches (17) auf einer horizontalen Fläche abgestellt werden kann, ohne dass eine fließfähige Substanz aus der zweiten Kammer (7) in die Umgebung austreten kann.

11. Verpackung nach einem der vorangehenden Ansprüche, **dadurch gekennzeichnet, dass** sie mehrere Einheiten (81) mit erster und zweiter Kammer umfasst.

12. Verfahren zum Herstellen eines direkt applizierbaren Gemisches zweier Substanzen, mit folgenden Schritten:
- Bereitstellen einer Verpackung (1) nach einem der Ansprüche 1-11, wobei die zweite Kammer (7) eine zweite Substanz (9) enthält,
- Ausüben eines Druckes von außen auf die erste Kammer (3), so dass (a) sich in dem besagten Bereich selektiv die Siegelverbindung zwischen den Folien (11, 13) löst, (b) ein Durchtrittskanal (25) zwischen der ersten und der zweiten Kammer gebildet wird und (c) die erste Substanz (5) aus der ersten in die zweite Kammer überführt und in Kontakt mit der zweiten Substanz gebracht wird,
- Durchstoßen der Deckfolie (13) in dem der zweiten Kammer (7) zugeordneten Bereich (17), der eine Materialschwächung besitzt,
- Vermischen der ersten und der zweiten Substanz vor oder nach dem Durchstoßen der Deckfolie (13),
- Entnehmen des Gemisches aus erster und zweiter Substanz aus der zweiten Kammer (7).

## Claims

1. Packaging (1) for storing at least two substances in separate chambers, comprising:
a first chamber (3), which contains a flowable first substance (5), and a second chamber (7),
the first chamber (3) and the second chamber (7) each being formed from portions of a base film (11) and a cover film (13), said portions being sealed to one another in liquid-tight manner,
the cover film (13) being a composite film comprising a first barrier film (21) of a metal material,
the base film (11) being a composite film comprising a second barrier film (29) of a metal material, **characterised in that** the metal material of the second barrier film (29) is softer than that of the first barrier film (21) so that piercing of the base film is effectively rendered more difficult,
the base film (11) and the cover film (13) being sealed to one another in a region (15) connecting the first chamber (3) and the second chamber (7), such that, by exerting an external pressure on the first chamber (3), (a) the sealing connection between the films (11, 13) can be selectively broken in the said region (15), (b) a through channel (25) can form between the first and the second chamber and (c) the first substance (5) can be transferred from the first chamber into the second chamber, and
the cover film (13) optionally having a material weakening in a region (17) associated with the second chamber (7), so that it may be pierced more easily in this region than in adjacent regions without a material weakening.

2. Packaging according to Claim 1, **characterised in that** the cover film (13) comprises a first sealing layer (19), the base film (11) comprises a second sealing layer (27) and the second sealing layer (27) is thicker than the first sealing layer (19) and is sealed thereto.

3. Packaging according to Claim 1 or 2, **characterised in that** a reinforced weld seam is placed in the region of the common edge around the chambers (3, 7).

4. Packaging according to one of the preceding claims, **characterised in that** a single weld seam is placed in the region connecting the first chamber (3) and the second chamber (7).

5. Packaging according to one of the preceding claims, **characterised in that** the cover film (13) comprises a stabilising film (23).

6. Packaging according to one of the preceding claims, **characterised in that** the optionally present material weakening of the cover film (13) is based on one or more of the following measures:
- a reduced thickness of the cover film (13) in the region associated with the second chamber (7) in comparison with adjacent regions of the cover film;
- a construction of the cover film as a composite film according to Claim 5, a stabilising film (23) being provided, which has a cutout in the region associated with the second chamber;
- an embossed portion or an incision in the cover film in the region associated with the second chamber.

7. Packaging according to one of the preceding claims, **characterised in that** the seal between the base film (11) and cover film (13) is weakened in the region (15) connecting the first chamber (3) and the second chamber (7).

8. Packaging according to Claim 7, **characterised in that** the seal between the base film (11) and cover film (13) is weakened in the region connecting the first chamber and the second chamber as a result of one or more of the following measures:
- arranging foreign particles, preferably punched peelable film portions, in the weakened seal region;
- before producing the seal, applying a substance which impairs the sealing of the base film and cover film to the base film and/or cover film in the region to be weakened;
- producing the seal by welding the base film and cover film, the welding temperature and/or the forming pressure when welding and/or the welding time in the region connecting the first chamber and the second chamber being different from the welding temperature and/or the forming pressure when welding and/or the welding time in adjacent regions,
- providing different seal geometries in (a) the region connecting the first chamber and the second chamber and (b) adjacent regions.

9. Packaging according to one of the preceding claims, **characterised in that** the base film (11) comprises an outer film (31).

10. Packaging according to one of the preceding claims, **characterised in that** the base film (11) has a standing area which is opposite the region of the cover film (13) in which there is a material weakening and is constructed such that, after or during the piercing of the materially weakened region (17), the packaging may be set down on a horizontal surface without a flowable substance being able to escape from the second chamber (7) into the surrounding environment.

11. Packaging according to one of the preceding claims, **characterised in that** it comprises a plurality of units (81) with a first and second chamber.

12. A process for producing a directly applicable mixture of two substances, having the following steps:
- providing packaging (1) according to one of Claims 1-11, the second chamber (7) containing a second substance (9);
- exerting an external pressure on the first chamber (3) so that (a) the sealing connection between the films (11, 13) is selectively broken in the said region, (b) a through channel (25) is formed between the first and the second chamber and (c) the first substance (5) is transferred from the first chamber into the second chamber and brought into contact with the second substance;
- piercing the cover film (13) in the region (17) associated with the second chamber (7) which has a material weakening;
- mixing the first and the second substance before or after piercing the cover film (13),
- removing the mixture of the first and second substance from the second chamber (7).

## Revendications

1. Emballage (1) pour stocker au moins deux substances dans des chambres séparées, comprenant :
une première chambre (3) qui contient une première substance (5) fluide et une deuxième chambre (7),
la première chambre (3) et la deuxième chambre (7) étant chacune formées par des tronçons étanches aux liquides scellés les uns aux autres d'une feuille de fond (11) et d'une feuille de recouvrement (13),
la feuille de recouvrement (13) étant une feuille composite comprenant une première feuille d'arrêt (21) en une matière métallique,
la feuille de fond (11) est une feuille composite qui comprend une deuxième feuille d'arrêt (29) en une matière métallique, **caractérisé en ce que** la matière métallique de la deuxième feuille d'arrêt (29) est plus souple que celle de la deuxième feuille d'arrêt (21), de sorte qu'une percée de la feuille de fond est rendue effectivement difficile,
**en ce que** dans une région (15) reliant la première chambre (3) et la deuxième chambre (7), la feuille de fond (11) et la feuille de recouvrement (13) sont scellées l'une à l'autre de telle sorte qu'en exerçant une pression depuis l'extérieur sur la première chambre (3),
(a) la liaison par scellement entre les feuilles (11, 13) se détache sélectivement dans ladite région (15),
(b) un canal de passage peut se former entre la première chambre et la deuxième chambre,
(c) la première substance (5) peut être transmise depuis la première chambre jusque dans la deuxième chambre, et
le cas échéant, la feuille de recouvrement (13) possède un affaiblissement de matériau dans une région (17) associée à la deuxième chambre (7), de telle sorte que dans cette région, elle peut être plus facilement percée que dans les régions voisines sans affaiblissement de matériau.

2. Emballage selon la revendication 1, **caractérisé en ce que** la feuille de recouvrement (13) comprend une première couche de scellement (19), la feuille de fond (11) comprend une deuxième couche de scellement (27), et la deuxième couche de scellement (27) est plus épaisse que la première couche de scellement (19) et est scellée sur celle-ci.

3. Emballage selon la revendication 1 ou 2, **caractérisé en ce qu'**un cordon de soudure renforcé est placé dans la région du bord commun autour des chambres (3, 7).

4. Emballage selon l'une des revendications précédentes, **caractérisé en ce qu'**un cordon de soudure simple est placé dans la région reliant la première chambre (3) et la deuxième chambre (7).

5. Emballage selon l'une des revendications précédentes, **caractérisé en ce que** la feuille de recouvrement (13) comprend une feuille de stabilisation (23).

6. Emballage selon l'une des revendications précédentes, **caractérisé en ce que** l'affaiblissement de matériau éventuellement présent de la feuille de recouvrement (13) est basé sur une ou plusieurs des mesures techniques suivantes :
- une réduction d'épaisseur de la feuille de recouvrement (13) dans la région associée à la deuxième chambre (7) en comparaison avec des régions voisines de la feuille de recouvrement,
- une configuration de la feuille de recouvrement en tant que feuille composite selon la revendication 5, dans laquelle est prévue une feuille de stabilisation (23) qui possède une échancrure dans la région associée à la deuxième chambre,
- une empreinte ou une entaille dans la feuille de recouvrement dans la région associée à la deuxième chambre.

7. Emballage selon l'une des revendications précédentes, **caractérisé en ce que** le scellement entre la feuille de fond (11) et la feuille de recouvrement (13) est affaibli dans la région (15) reliant la première chambre (3) et la deuxième chambre (7).

8. Emballage selon la revendication 7, **caractérisé en ce que** le scellement entre la feuille de fond (11) et la feuille de recouvrement (13) est affaibli dans la région reliant la première chambre et la deuxième chambre en raison de l'une ou de plusieurs des mesures techniques suivantes :
- agencement de particules étrangères, de préférence de confettis de feuille pelable, dans la région de scellement affaiblie,
- avant de produire le scellement, application d'uns substance entravant le scellement de la feuille de fond et de la feuille de recouvrement sur la feuille de fond et/ou sur la feuille de recouvrement dans la région à affaiblir,
- production du scellement par soudage de la feuille de fond et de la feuille de recouvrement, dans laquelle dans la région reliant la première chambre à la deuxième chambre la température de soudage et/ou la pression de pressage lors du soudage et/ou le temps de soudage sont autres que dans des régions voisines,
- prévision de différentes géométries de scellement
(a) dans la région reliant la première chambre et la deuxième chambre et
(b) dans des régions voisines.

9. Emballage selon l'une des revendications précédentes, **caractérisé en ce que** la feuille de fond (11) comprend une feuille extérieure (31).

10. Emballage selon l'une des revendications précédentes, **caractérisé en ce que** la feuille de fond (11) possède une surface de pose qui est opposée à la région de la feuille de recouvrement (13) dans laquelle celle-ci possède un affaiblissement de matériau et qui est réalisée de telle sorte que l'emballage après ou pendant la percée de la région (17) de matériau affaibli peut être posée sur une surface horizontale sans qu'une substance liquide puisse sortir de la deuxième chambre (7) et se répandre dans l'environnement.

11. Emballage selon l'une des revendications précédentes, **caractérisé en ce qu'**il comprend plusieurs unités (81) avec une première chambre et une deuxième chambre.

12. Procédé de fabrication d'un mélange directement applicable de deux substances, présentant les étapes suivantes :
- on prépare un emballage (1) selon l'une des revendications 1 à 11, la deuxième chambre (7) contenant une deuxième substance (9),
- on exerce une pression depuis l'extérieur sur la première chambre (3) de sorte que
(a) la liaison par scellement entre les feuilles (11, 13) se détache sélectivement dans ladite région,
(b) un canal de passage (25) est formé entre la première chambre et la deuxième chambre et
(c) la première substance (5) est amenée depuis la première chambre jusque dans la deuxième chambre et est mise en contact avec la deuxième substance,
- on perce la feuille de recouvrement (13) dans la région (17) associée à la deuxième chambre (7), laquelle possède un affaiblissement de matériau,
- on mélange la première substance et la deuxième substance avant ou après avoir percé la feuille de recouvrement (13),
- on prélève le mélange formé à partir de la première substance et de la deuxième substance hors de la deuxième chambre (7).
